Europäisches Patentamt

European Patent Office

Office européen des brevets

(19)

(11) Publication number: **0 305 825**
**A2**

## (12) EUROPEAN PATENT APPLICATION

(21) Application number: 88113498.5

(22) Date of filing: 20.04.83

(51) Int. Cl.⁴: **A22C 13/00 , A22C 11/00 , B65H 45/22 , B31F 1/08**

(30) Priority: 23.04.82 ES 512263
23.04.82 ES 265171 U

(43) Date of publication of application:
**08.03.89 Bulletin 89/10**

(60) Publication number of the earlier application in accordance with Art.76 EPC: **0 092 970**

(84) Designated Contracting States:
**BE DE FR GB IT LU NL SE**

(71) Applicant: **Barroso, Angel Lorenzo**
**Arquitecto Cabanes, s.n.**
**Mataro Barcelona(ES)**

(72) Inventor: **Barroso, Angel Lorenzo**
**Arquitecto Cabanes, s.n.**
**Mataro Barcelona(ES)**

(74) Representative: **Billington, Lawrence Emlyn**
**HASELTINE LAKE & CO Hazlitt House 28**
**Southampton Buildings Chancery Lane**
**London WC2A 1AT(GB)**

(54) Device for pleating unfilled tubular casings.

(57) A device for pleating unfilled tubular casings, such as sausage skins, so that a knot can be tied round the pleated end, has a pair of parallel plates (30,31) with a small separation to allow the casing, in the form of a web, to pass between them on its way to a knotting and cutting station. Folding and guiding elements, which may be in the form of vertical rollers (35) and transverse elements or rollers (36,37), are arranged on the plates and narrow towards the exit of the device so that the edges of the web are repeatedly folded over themselves, resulting in the desired pleats.

FIG. 1

EP 0 305 825 A2

## Device for pleating unfilled tubular casings

The invention relates to a device for forming multiple longitudinal folds or pleats in strips, in particular tubular film such as sausage casings.

In the factory production of sausages, it is usual practice to form unfilled tubular casings from a roll supply of folded tubular skin by cutting the skin to lengths, and then knotting one of the ends of the cut length. The other end is left open so as to be able to introduce sausage meat and the like into the casing at a later stage in the production. The knotting of the ends of the tubular casings may be carried out manually, one by one, or automatically.

In apparatus for forming and delivering unfilled tubular casings to a storage station at which they are suspended, the casings are formed from a web of tubular film around which a knotted loop is taken to form a closed end of the casing and the tubular film is then cut to form a predetermined length of tubular casing attached to the knotted loop.

With the object of improving the presentation of the tying or fastening of the ends of sausages, and of making the tension to which the skin is subjected in the tying or fastening operations uniform, it has been known for a long time to form the pleats in the skin by hand.

This known pleating has usually been carried out in one of two ways. In one method, a pair of toothed wheels is used, through which the sausage skin is made to pass cross-wise. Another method uses cross-wise introduction of the skin among a series of parallel sheet strips which converge towards the exit opening of the pleated skin.

The toothed wheel system presents the most serious disadvantages of having the teeth of the wheels adversely affecting the skin to such an extent that they may even penetrate it, and also of having to introduce the skins sideways one by one, thus preventing a continuous feeding of the skin.

The system which uses the converging parallel sheet strips offers the serious disadvantage in that the strips rub considerably against the skin, so that a strong drive system must be provided, apart from the adverse effect of the rubbing on the skin.

According to the invention, there is provided a device for location between a knotting and cutting station and a supply of a web of tubular film, the device being adapted to form multiple longitudinal folds in the web and comprising a pair of plates arranged one over the other to allow the web to pass therebetween, there being between the plates folding and guiding elements whereby in use the web enters the plates in flattened and unfolded form and leaves the plates, for passing to the knotting and cutting station, with multiple longitudinal folds.

With the invention the disadvantages of the known means for forming pleating in a tubular casing are overcome, by provision of a device which operates automatically.

Such a device is preferably provided upstream of a knotting and cutting station in order to form the web of tubular film with multiple longitudinal pleats before the knot is tied. A suitable knotting and cutting apparatus is described in copending European patent application No. 83302241.1.

One embodiment of the invention will now be described in more detail, by way of example only, with reference to the accompanying drawings, in which:-

Figure 1 is a perspective illustration of a device arranged upstream of a knotting and cutting station and comprising a device for making multiple longitudinal folds in a continuous supply of tubular film;

Figure 2 is a side view, partly in section, of the fold-forming device shown in Figure 1; and

Figures 3, 4 and 5 are cross-sectional views taken along the lines III-III, IV-IV and V-V in Figure 2.

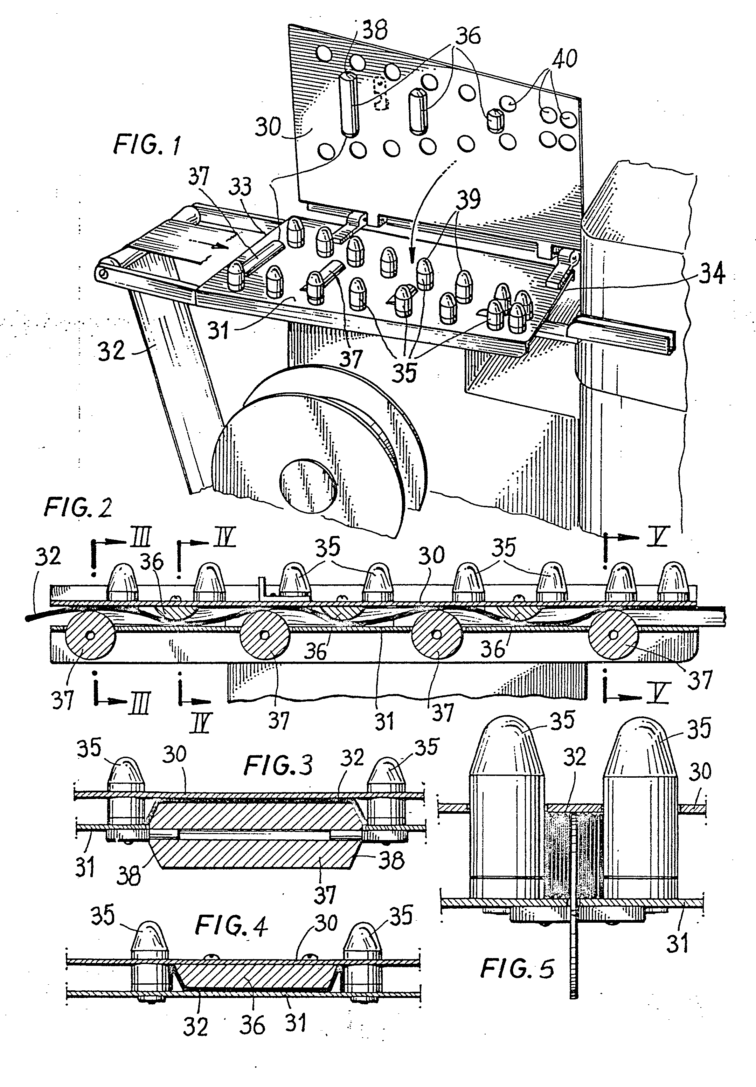

Figures 1 to 5 illustrate a device which may be arranged upstream of a knotting and cutting station and serves to apply multiple longitudinal folds to a web 32 of flattened tubular film from which the tubular casings 2 are formed. The folding device comprises an upper plate 30 and a lower plate 31 which are hinged together, with the upper plate 30 being movable to an open position shown in Figure 9 in order to allow initial placement of the web 32. The web 32 is taken from a reel supply, and is taken through an entry end 33 of the plates 30 and 31, and then leaves via an exit 34. The plate 30 is hinged downwardly to a position parallel to, but closely spaced above the plate 31, and folding and guiding elements provided between the plates 30 and 31 serve to apply multiple longitudinal folds to the web 32. Thus, the web 32 is flat when it passes through entry end 33, but has multiple longitudinal folds as it leaves exit 34.

A progressively narrowing guide path is provided for the web 32 by means of pairs of lateral limiting elements 35 which extend upwardly from plate 31 and have tapered upper ends 39 taken through holes 40 formed in the upper plate 30. As will be seen from Figure 1, the pairs of elements 35 are spaced apart by distances which narrow from the entry end 33 to the exit end 34 of the plates 30 and 31. The elements 35 comprise rollers which are rotatable about axes extending perpendicular to the plane of the plates 30 and 31.

Within the space defined between the plates 30 and 31, transversely extending folding elements are arranged, upper folding elements 36 being mounted in the plate 30, and lower elements 37 being rotatably mounted in plate 31. The folding elements 36 and 37 extend transversely between the lateral elements 35 and transversely of the path of movement of the web 32 through the plates 30 and 31.

The laterally outer ends 38 of the folding elements 36 and 37 are separated from the adjacent elements 35 by a distance which is less than or equal to the distance which separates the plates 30 and 31.

It is preferred that the lateral limiting elements 35 comprise freely rotatable rollers having conically tapering upper ends 39 rotatable in the holes 40.

The transversely extending folding elements (36,37) of at least one of the plates 30 and 31, in the illustrated embodiment the folding elements 37 of the plate 31, are advantageously made of freely rotatable rollers having an axis of rotation extending parallel to the plates 30 and 31.

Preferably, the transversely extending folding elements 36 and 37 are slightly tapered at their ends.

The manner in which the web 32 undergoes folding action by the device will be readily apparent from Figures 2 to 5.

Claims

1. A device for location between a knotting and cutting station and a supply of a web (32) of tubular film, the device being adapted to form multiple longitudinal folds in the web (32) and comprising a pair of plates (30,31) arranged one over the other to allow the web (32) to pass therebetween, there being between the plates folding and guiding elements whereby in use the web (32) enters the plates (30,31) in flattened and unfolded form and leaves the plates, for passing to the knotting and cutting station, with multiple longitudinal folds.

2. Device according to claim 1, wherein the folding and guiding elements comprise pairs of lateral limiting elements (35) which extend between the plates (30,31) and which are spaced apart by distances which narrow from the inlet (33) to the outlet (34) of the plates, and transverse elements (37,38) which are arranged in the plane of the plates and along the path between the inlet (33) and the outlet (34) and which are spaced from the lateral limiting elements (35) by a distance less than or equal to the spacing apart of the plates (30,31).

3. Device according to claim 2, characterised in that the lateral limiting elements comprise rollers (35) which are rotatable about axes extending perpendicular to the plane of the plates (30,31).

4. Device according to claim 3, characterised in that the upright rollers (35) have tapered ends (39).

5. Device according to any of claims 2 to 4, characterised in that the transverse elements include rollers (37) which are rotatable about axes contained in at least one of the planes of the plates (30,31).

6. Device according to any one of claims 1 to 5, characterized in that the plates (30,31) are separable to allow initial placement of the web (32) therebetween.

FIG. 1

FIG. 2

FIG. 3

FIG. 4

FIG. 5